# EUROPEAN PATENT APPLICATION

(11) **EP 4 844 025 A1**
(43) Date of publication of application: **25.11.2026**
(21) Application number: 25177543.3
(22) Date of filing: 20.05.2025
(51) Int. Cl.: C08L 67/04

(54) **PRESSURE SENSITIVE ADHESIVE COMPOSITIONS BASED ON POLYCAPROLACTONE AND POLYLACTIC ACID**

(71) Applicant: Bostik SA, 92800 Puteaux (FR)
(72) Inventor: Rodell, Nicholas Victor, Union Grove, WI, 53182 (US)
(74) Representative: Fiorucci, Hélène

(57) **Abstract**

An adhesive composition comprises a first polymer that is polylactic acid or a polylactic acid-based copolymer or mixtures thereof; a second polymer that is polycaprolactone or a polycaprolactone-based copolymer or mixtures thereof; a tackifier; and a plasticizer; wherein the weight ratio of the second polymer to the sum of the first polymer and the second polymer is between about 0.3:1 and about 0.99:1, preferably between about 0.4:1 and about 0.95:1, more preferably between about and about 0.4:1 and about 0.85:1 and most preferably between about 0.5:1 to about 0.8:1. The adhesive is useful for a variety of industrial applications, especially for use in making tapes and labels. The adhesive composition may be used as a pressure sensitive adhesive (PSA) or a hot melt pressure sensitive adhesive (HMPSA).

## Description

### FIELD OF THE INVENTION

This invention relates to an adhesive composition based on polycaprolactone and polylactic acid, in particular a pressure sensitive adhesive (PSA) and hot melt pressure sensitive adhesive (HMPSA) composition. The adhesive is environmentally friendly as at least some of its materials may be sourced from renewable resources and it potentially exhibits increased biodegradability. The adhesive shows good peel performance, even for extended times, and is particularly useful for tapes and labels.

### BACKGROUND OF THE INVENTION

Pressure sensitive adhesives (PSAs) are substances that give the support coated therewith an immediate tack at room temperature, which allows its instantaneous adhesion to a substrate under the effect of brief slight pressure. PSAs are widely used for the manufacture of self-adhesive labels which are fastened to articles for the purpose of presenting information (such as a bar code, description, and price) and/or for decorative purposes. PSAs are also used for the manufacture of self-adhesive tapes of various uses. Such uses include transparent adhesive tape widely used in daily life; the forming and assembling of cardboard packaging; the protection of surfaces for painting works; in construction; holding electrical cables in the transport industry; and the bonding of carpets by double-sided adhesive tapes.

With a view to the manufacture of self-adhesive labels and tapes, PSAs are generally applied by continuous coating processes to the entire surface of a support layer of large dimensions in a suitable amount. The support layer is constituted of paper or a film of polymer material having one or more layers. The adhesive layer that covers the support layer may itself be covered with a protective non-stick layer (often called a "release liner"), for example composed of a siliconized film. The multilayer system obtained is generally packaged by being wound up in the form of large reels up to two meters in width and one meter in diameter, which can be stored and transported.

These multilayer systems may subsequently be converted to self-adhesive labels that can be applied by the end users by conversion processes that include the printing of desired decorative elements and/or information on the printable side of the support or film layer, followed by cutting to the desired shape and dimensions. The protective non-stick layer may be easily removed without modifying the adhesive layer that remains fastened to the support layer. After separation from its protective non-stick layer, the label is applied to the article or substrate to be coated either manually or with the use of labelers on automated packaging lines. These multilayer systems may also be converted to self-adhesive tapes by cutting and packaging as rolls of predetermined width and length.

PSAs, because of their high room-temperature tack, make it possible for the self-adhesive label or tape to be rapidly bonded to the substrate or article to be coated, for example, regarding labels, onto bottles and regarding tapes, onto packing boxes to be formed.

Sourcing raw materials from renewable resources (i.e., those which are not products of fossil fuels) offers environmental benefits. In this context, it is advantageous to develop adhesives that are derived entirely or partially from renewable biosources. In addition, it is also desirable to use adhesives which are biodegradable. Polylactic acid is known to be able to be sourced from renewable materials. For example, it is a bioplastic made from renewable, plant-based materials like corn, cassava, and sugarcane. Some grades of polycaprolactone are also known to be sourced from renewable resources, such as biochar, which is produced by pyrolysis of hardwood waste biomass (e.g. sawdust, branches, and bark). Vidal, Juliana L., et al., "Biochar as a Sustainable and Renewable Additive for the Production of Poly(ε-caprolactone) Composites," Sustainable Chemistry and Pharmacy, Vol. 25, April, 2022. Efforts have been made to use polymers made from renewable resources in adhesives.

US11945978A1 discloses a hot melt adhesive comprising a bio-based hot melt adhesive composition comprising a mixture of a polylactic acid-based polymer, a polylactic acid-based bio-nucleator, a polylactic acid-based bio-tackifier, and a polylactic acid-based bio-wax. In an embodiment, one of the constituents is a block copolymer made of (i) amorphous lactic acid and caprolactone and (ii) having of crystalline lactic acid.

CN115895593A1 discloses a biodegradable pressure sensitive adhesive comprising triblock elastomers made of lactide hard end-blocks and polycaprolactone mid-blocks. The hard blocks are said to provide sufficient physical crosslinking and cohesive strength. A tackifier is used which is selectively compatible with the caprolactone soft segment in the triblock elastomer, so that the pressure sensitive adhesive is endowed with good initial adhesion. The glass transition temperature of the pressure sensitive adhesive can be adjusted by varying the proportion of the hard monomer to the soft monomer.

An object of the present invention is to provide an environmentally-friendly adhesive, in particular a PSA or a HMPSA, with an improved initial peel strength and maintaining such strength over time.

Another object of the present invention is to provide an adhesive that is composed predominantly, and preferably entirely, of renewable raw materials, while also exhibiting enhanced biodegradability.

### SUMMARY OF THE INVENTION

A first object of the present invention is an adhesive composition comprising:
- a first polymer selected from the group consisting of at least one of polylactic acid and a polylactic acid-based copolymer comprising residues of: (a) lactic acid in an amount of at least 70 mol%, preferably at least 80 mol.%, more preferably at least 90 mol.%, and most preferably at least 95 mol.% and (b) a first comonomer;
- a second polymer selected from the group consisting of at least one of polycaprolactone and a polycaprolactone-based copolymer comprising residues of: (a) ε-caprolactone in an amount of at least 70 mol.%, preferably at least 80 mol.%, more preferably at least 90 mol.%, and most preferably at least 95 mol.% and (b) a second comonomer;
- a tackifier; and
- a plasticizer;
wherein the weight ratio of the second polymer to the sum of the first polymer and the second polymer is between about 0.3:1 and about 0.99:1, preferably between about 0.4:1 and about 0.95:1, more preferably between about 0.45:1 and about 0.9:1, and most preferably between about 0.5:1 to about 0.8:1.

The adhesive composition of the invention may be a pressure sensitive adhesive (PSA) composition, in particular a hot melt PSA (HMPSA) composition.

A second object of the present invention is a tape or label comprising a film and an adhesive composition as described herein coated on a surface of the film.

A third object of the present invention is a method of making a tape or label comprises the steps of heating an adhesive composition as described herein to provide a molten form and applying the molten form to a film.

A fourth object of the present invention is a method of adhering the tape or label described herein to a substrate comprises applying the tape or label to the substrate at room temperature.

A fifth object of the present invention is the use of the composition as described herein as a pressure sensitive adhesive (PSA), preferably as a hot melt pressure sensitive adhesive (HMPSA).

### BRIEF DESCRIPTION OF THE DRAWING

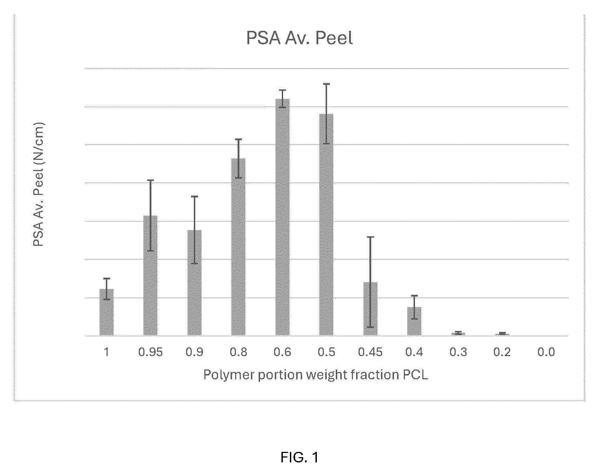

FIG. 1 is a graph showing the average peel strength provided by adhesives having a range of weight ratios of polycaprolactone to the sum of polycaprolactone and polylactic acid.

### DETAILED DESCRIPTION OF THE INVENTION

### Definitions

The term "about" may be used in conjunction with numerical values and/or ranges. The term "about" is understood to mean those values near to a recited value. For example, "about 20 wt.%" may mean within ±10% of 20 wt.%, that-is-to-say "18 wt.% to 22 wt.%".

Throughout the present specification, numerical ranges comprise all subranges therein. For example, the range "from 20 to 150" includes all possible ranges therein (e.g., 21-149, 30-140, 50-100, etc.). Additionally, all values within a given range may be an endpoint for the range encompassed thereby (e.g., the range 20-150 includes the ranges with endpoints such as 20-100, 90-150, etc.).

### Adhesive composition

The invention relates to an adhesive composition. An adhesive composition is a composition that is suitable for obtaining an adhesive.

The adhesive composition of the invention may be a pressure sensitive adhesive (PSA) composition. A PSA is a viscoelastic adhesive having a permanently tacky surface in the dry state at room temperature. Adhesion to substrates is accomplished immediately by gentle applied pressure and does not require an activation step (for example heating or wetting with water).

In particular, the invention is directed to an environmentally friendly adhesive, including a PSA and a HMPSA. The composition comprises both a polycaprolactone (co)polymer (i.e., polycaprolactone (PCL) or a polycaprolactone-based copolymer) and a polylactic acid (co)polymer (i.e., polylactic acid (PLA) or a polylactic acid-based copolymer). The term "environmentally friendly" as used herein refers to an adhesive (e.g., PSA and HMPSA) which is at least partially sourced from raw materials made or obtained from renewable resources. The term "partially" in this context may notably refer to at least about 20 wt.%, at least about 30 wt.%, at least about 40 wt.%, at least about 50 wt.%, at least about 60 wt.%, at least about 70 wt.%, at least about 80 wt.%, at least about 90 wt.%, at least about 95 wt.% or at least about 98 wt.%, of raw materials made or obtained from renewal resources. Even more preferably, the adhesive is predominantly sourced from materials made or obtained from renewable resources, wherein "predominantly" means at least about 50 wt.%, at least about 60 wt.%, at least about 70 wt.%, at least about 80 wt.%, at least about 90 wt.%, at least about 98 wt.%, at least about 99 wt.%, or at least about 99.5 wt.%, of raw materials made or obtained from renewal resources.

The adhesives of the prior art using PLA as the sole polymer generally cannot maintain pressure sensitive properties over time. Similarly, the adhesives of the prior art using PCL as the sole polymer generally cannot maintain pressure sensitive properties over time due to crystallization; such adhesives lose tack over time. In other words, as such adhesives crystallize, they lose tack.

Interestingly, a PSA has been created by mixing PCL and PLA, at a specified ratio range, together with a plasticizer and a tackifier. The PSA of the present invention provides improved peel performance, in comparison to adhesives made using PCL as the sole polymer or adhesives made using PLA as the sole polymer. In some embodiments, the PSA exhibits exceptional initial peel performance, about 4.8 N/cm at 25.4 microns (i.e., 1,200 g-f/inch at 1 mil) to stainless steel. In some embodiments, PSA maintains peel performance of at least 3.9 N/cm for at least four weeks.

As used herein, a PSA (e.g., HMPSA) is said to be tacky at room temperature when it allows for instantaneous adhesion to a substrate under the effect of brief slight pressure at room temperature. In particular, a HMPSA does not require any solvent (including water), heat, or energy (e.g., radiation) to become activated (or tacky).

The adhesive composition of the present invention comprises:
- a first polymer selected from the group consisting of at least one of polylactic acid and a polylactic acid-based copolymer comprising residues of: (a) lactic acid in an amount of at least 70 mol.%, preferably at least 80 mol.%, more preferably at least 90 mol.%, and most preferably at least 95 mol.% and (b) a first comonomer;
- a second polymer selected from the group consisting of at least one of polycaprolactone and a polycaprolactone-based copolymer comprising residues of: (a) ε-caprolactone in an amount of at least 70 mol.%, preferably at least 80 mol.%, more preferably at least 90 mol.%, and most preferably at least 95 mol.% and (b) a second comonomer;
- a tackifier; and
- a plasticizer;
wherein the weight ratio of the second polymer to the sum of the first polymer and the second polymer is between about 0.3:1 and about 0.99:1, preferably between about 0.4:1 and about 0.95:1, more preferably between about 0.45:1 and about 0.9:1, and most preferably between about 0.5:1 to about 0.8:1.

Traditionally, the slow crystallization kinetics of polylactic acid-based adhesives result in a significant decrease in the peel strength over time. As a result, these materials are often relegated to non-pressure sensitive applications. Surprisingly, issues related to long term bond performance can be somewhat remediated by using both polycaprolactone (or a polycaprolactone-based copolymer) and polylactic acid (or a polylactic acid-based copolymer) together in the ratio range noted above.

The adhesive may be a HMPSA, where it is tacky at room temperature and does not require solvent (including water), heat, or energy (e.g., radiation) to activate. Preferably, the composition is suitable for processing at typical application temperatures, such as about 150°C. In some embodiments, the composition has a viscosity of between about 250 to about 1,000,000 mPa.s at 150°C, preferably between about 500 to about 500,000 mPa.s at 150°C and more preferably between about 1,000 to about 250,000 mPa.s at 150°C, as measured per ASTM - D3236 by using a Brookfield viscometer at about 150°C (i.e., 300°F).

### Polylactide (co)polymer

The first polymer may be polylactic acid (i.e., polylactic acid homopolymer, also referred to as polylactide or polylactide homopolymer), a polylactic acid-based copolymer (i.e., a polylactide-based copolymer or polylactide copolymer), or combinations thereof. As used herein, a polylactic acid-based copolymer means a copolymer made from at least 70 mol.% lactic acid based on the total moles of monomers in the copolymer. Thus, a polylactic acid-based copolymer comprises residues of at least 70 mol.% lactic acid and residues of a first comonomer. Additional comonomers may be used. For example, a polylactic acid-based copolymer may comprise residues of at least 70 mol.% lactic acid, residues of a first comonomer and residues of another comonomer (distinct from the first comonomer). As used herein, references to "combinations thereof" should not be taken to mean that the polylactic acid and the polylactic acid-based copolymer must be pre-blended before addition to the other constituents of the HMPSA composition.

The first (and additional) comonomer(s) is(are) are not limited and may include any comonomers suitable for use in a PSA or a HMPSA. In an embodiment, the first comonomer comprises at least one of ε-caprolactone, α-caprolactone, β-caprolactone, γ-caprolactone, δ-caprolactone, glycolide, glycolic acid, or caprolactam. In an embodiment, the first comonomer is selected from the group consisting of, ε-caprolactone, α-caprolactone, β-caprolactone, γ-caprolactone, δ-caprolactone, glycolide, glycolic acid, and caprolactam and combinations thereof. In a preferred embodiment, the polylactide homopolymer or copolymer comprises, consists essentially of, or consists of polylactic acid. In other embodiments, the polylactide homopolymer or copolymer comprises, consists essentially of, or consists of the polylactic acid-based copolymer.

The general structure (I) of the polylactide is shown below and is a thermoplastic polyester that may be made by the condensation of lactic acid with the loss of water or the ring opening polymerization of lactide:

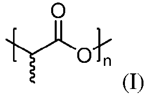

Suitable polylactide homopolymers or copolymers for use herein may have a number average molecular weight (Mn) between about 10 kDa and about 400 kDa, preferably between about 25 kDa and about 250 kDa, and more preferably between about 40 kDa and about 150 kDa. All molecular weights mentioned herein are measured by gel permeation chromatography (GPC) using polystyrene standards. While poly(D,L-lactide) and the meso-lactide-based PLA are essentially amorphous, poly(L-lactide) (PLLA) and poly(D-lactide) (PDLA) are semi-crystalline and have a crystalline melting point of approximately 186° C. The melting point can be varied by adjusting its molecular weight and/or the degree of stereoregularity (stereopurity).

In an embodiment, the first polymer (i.e., polylactide (co)polymer) is amorphous or essentially amorphous.

As used herein, an amorphous polymer is a polymer that has no evidence of crystallinity, and an essentially amorphous polymer is a polymer that has essentially no evidence of crystallinity. Crystallinity is determined by DSC, against a highly crystalline polypropylene standard. An amorphous, or essentially amorphous, polymer may have a degree of crystallization of less than about 2%, less than about 1%, less than about 0.5%, less than about 0.1%, or less than about 0.05%, as determined by DSC against a highly crystalline polypropylene standard. An amorphous, or essentially amorphous, polymer may have heat of fusion of less than about 1.5 Joules/gram, preferably less than about 1 Joules/gram, more preferably less than about 0.5 Joules/gram, and most preferably near zero Joules/gram. Semicrystalline polymers are those materials which have a well-arranged crystalline phase embedded within a more random amorphous domain. The ordered crystalline sites impart the properties such as toughness and opacity to the resin. Semicrystalline polymers may have a degree of crystallinity of 30% or less as determined by DSC, against a highly crystalline polypropylene standard. Semicrystalline polymers may have a heat of fusion of greater than about 2.5 Joules/gram and up to about 75 Joules/gram, preferably greater than about 10 Joules/gram and up to about 70 Joules/gram, and more preferably greater than about 20 Joules/gram and up to about 65 Joules/gram. Heat of fusion values provided herein are determined according to ASTM D3418-21 "Standard Test Method for Transition Temperatures and Enthalpies of Fusion and Crystallization of Polymers by Differential Scanning Calorimetry" with a ramp rate of 20°C/minute. As is known in the art, heat of fusion values are typically obtained and reported as the values obtained upon the second heat of the sample.

The first polymer (i.e., polylactide (co)polymer) may be prepared by ring-opening polymerization of the bimolecular cyclic ester of lactic acid with acid or base catalysts such as PbO, SnCl₂, SnCl₄, ZnCl₂, SbF₅, Sb₂O₃, or triethylamine using solution, precipitation, or melt processes. Alternatively, they may be obtained commercially from Henley Chemicals, Inc. under the Resomer^{®} tradename; from Poly Sciences Inc., or from Ecological Chemical Products Company (EcoChem). Poly (D,L-lactide-co-glycolide) polymers containing equimolar amounts of the lactide and glycolide components are available from Henley chemicals as Resomer^{®} RG502, 503, 504, 505 and 506 and are suitable for use herein. In addition, poly(D,L-lactide-co-glycolide) polymers known as Resomer^{®} RG752, 755 and 756 containing 75% of the lactide component as well as the Resomer^{®} 858 polymer which contains 85% lactide are also suitable. Other exemplary polylactide homopolymers or polylactide-based copolymers are the Vercet line of resins, especially Vercet A1000, or Ingeo biopolymers, especially Ingeo 10250D, both commercially available from Nature Works LLC. The Vercet products are a thermoplastic resin derived from renewable resources, are available in pellet form, and are amorphous, low-melting, high-flow resins. The Ingeo line of biopolymers are made from natural plant sugars and made primarily of polylactic acid.

In one embodiment, the polylactide homopolymer or copolymer is a thermoplastic resin derived from renewable resources. Preferably, the polylactide homopolymer or copolymer is amorphous and has a low melting point. In embodiments of the invention, the glass transition temperature of the polylactide homopolymer or polylactide-based copolymer is between about 0°C and 120°C, preferably between about 20°C and 100°C, and more preferably between about 30°C and 80°C, as measured according to ASTM D3417 except that a ramp rate of 20°C per minute is used.

### Polycaprolactone (co)polymer

The second polymer may be polycaprolactone (i.e., polycaprolactone homopolymer), a polycaprolactone-based copolymer, or combinations thereof. As used herein, a polycaprolactone-based copolymer means a copolymer made from at least 70 mol.% ε-caprolactone based on the total moles of monomers in the copolymer. Thus, a polycaprolactone-based copolymer comprises residues of at least 70 mol.% of ε-caprolactone acid and residues of a second comonomer. Additional comonomers may be used. For example, a polycaprolactone-based copolymer may comprise residues of at least 70 mol.% of ε-caprolactone acid, residues of a second comonomer and residues of another comomomer (distinct from the second comonomer). As used herein, references to "combinations thereof" should not be taken to mean that the polycaprolactone and the polycaprolactone-based copolymer must be pre-blended before addition to the other constituents of the HMPSA composition.

The second (and additional) comonomer(s) is(are) are not limited and may include any comonomers suitable for use in a PSA or a HMPSA. In an embodiment, the second comonomer comprises at least one of lactic acid, α-caprolactone, β-caprolactone, γ-caprolactone, δ-caprolactone, glycolide, glycolic acid, or caprolactam. In an embodiment, the second comonomer is selected from the group consisting of lactic acid, α-caprolactone, β-caprolactone, γ-caprolactone, δ-caprolactone, glycolide, glycolic acid, and caprolactam and combinations thereof. In a preferred embodiment, the polycaprolactone homopolymer or polycaprolactone-based copolymer comprises, consists essentially of, or consists of polycaprolactone. In other embodiments, the polycaprolactone homopolymer or polycaprolactone-based copolymer comprises, consists essentially of, or consists of the polycaprolactone-based copolymer.

The general structure (II) of the polycaprolactone is shown below. Polycaprolactone is a thermoplastic polymer and may be produced by ring-opening polymerization of ε-caprolactone.

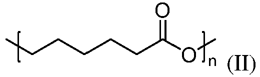

Suitable polycaprolactone homopolymers or copolymers for use herein may have a number average molecular weight (Mn) between about 1 kDa and about 400 kDa, preferably between about 25 kDa and about 300 kDa, and more preferably between about 50 kDa and about 200 kDa. All molecular weights mentioned herein are measured by gel permeation chromatography (GPC) using polystyrene standards.

In an embodiment, the second polymer (i.e., polycaprolactone (co)polymer) is semicrystalline.

Suitable commercially available polycaprolactone homopolymers or copolymers include PCL from Sigma, Ambeed, Thermofischer, Ingevity.

In some embodiments of the invention, the glass transition temperature of the polycaprolactone homopolymer or copolymer is between about -120°C and 0°C, preferably between about -100°C and -20°C, and more preferably between about -80°C and -40°C, as measured according to ASTM D3417 except that a ramp rate of 20°C per minute is used.

The first and second polymers may be crosslinked or not. When they are crosslinked, they can be crosslinked either before or *in situ* with the other components of the adhesive composition of the present invention. Suitable crosslinking agents may be added either to the two polymers before mixing with the other components or after mixing with some or all of the other components. Such crosslinkers may include radical crosslinkers such as dicumyl peroxide; organometallic crosslinkers; diepoxides; and polyols.

When the first and second polymers are not crosslinked, the adhesive composition does not contain any crosslinking agents.

### Tackifier

The adhesive composition of the present invention also comprises a tackifier, also called tackifying resin or tackifier resin.

A tackifier is a polymeric or oligomeric adjuvant for adhesive polymers or, generally, for elastomers, which increases their autoadhesion (tack, inherent stickiness, self-adhesion), meaning that they adhere firmly to surfaces after brief, gentle applied pressure. Tackifiers extend adhesive properties and improve specific adhesion.

Tackifier resins are known, for example, from Adhesive Age, July 1987, pages 19-23 or Polym. Mater. Sci. Eng. 61 (1989), pages 588-592.

Any compatible tackifier (for example commercially available) may be used in the composition of the present invention. Incompatible tackifiers are those which do not mix well with the polymers, such as by forming two different phases. In an embodiment, the tackifier comprises a terpene phenolic resin, which is the resin product resulting from the condensation in an acidic medium of a terpene and a phenol. In an embodiment, the tackifier has an R&B softening point of between about 40°C and 180°C, preferably between about 80°C and 160°C, and more preferably between about 100°C and 140°C, as determined by ASTM method E28-58T. In an embodiment, the tackifier has a glass transition temperature of between about 10°C and 130°C, preferably between about 30°C and 110°C, and more preferably between about 50°C and 90°C as determined according to ASTM D3417 except that a ramp rate of 20°C per minute is used.

### Plasticizer

The adhesive composition of the present invention also comprises a plasticizer. A plasticizer serves to provide desired viscosity control and to impart flexibility. A suitable plasticizer may comprise at least one plasticizing oils, such as mineral oil, a castor oil, or soybean oil, ual, but also may comprise a polyester, a citric acid derivative (preferably acetyl tributyl citrate), or a polyethylene glycol, or derivatives thereof, or combinations of any of the above. Suitable vegetable include glycerol esters of the usual fatty acids and polymerization products thereof.

Plasticizers are used herein to lower the viscosity of the adhesive composition without substantially decreasing the adhesive strength and/or the service temperature of the adhesive, as well as to extend the open time and to improve flexibility of the adhesive.

In an embodiment, the plasticizer is a compound having at least one ester linkage. In particular, the plasticizer used in the composition of the invention may have between 1 and 10, preferably between 2 and 8, and more preferably between 2 and 6 ester linkages. An example of suitable plasticizer is Citroflex^{®} A4 having the chemical name acetyltri-n-butyl citrate (with 4 ester linkages) commercially available from Vertellus Greensboro LLC, and having the following structure (III):

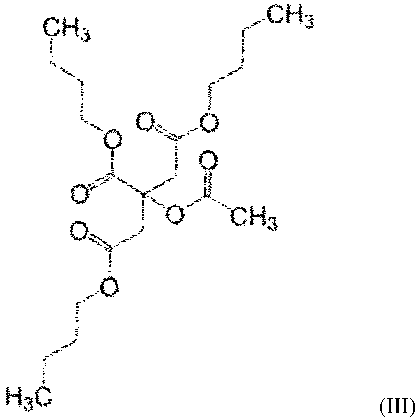

Other suitable plasticizers are Hallgreen^{®} R-9010 commercially available from The Hallstar Company, or bis (octadecyl) sebacate.

In particular, the plasticizer used in the composition of the invention may have a molecular weight of at most about 5,000 g/mol, preferably at most about 2,000 g/mol, more preferably at most about 1,500 g/mol, and most preferably at most about 1,000 g/mol, and preferably at least about 100 g/mol, more preferably at least about 200 g/mol, and most preferably at least about 250 g/mol. As will be recognized, when the compound is a small molecule, it will have a single molecular weight but, when it is an oligomer or a polymer, its molecular weight will be understood to be its weight average molecular weight. Compounds having ester groups are more environmentally friendly (both in terms of being generally biodegradable and sourced at least partially from renewable resources) than many other types of plasticizers.

### Relative contents of the components

The relative amounts of the components of the adhesive composition of the present invention may vary over a wide range depending on the particular end use and desired properties, such as adhesive properties, application temperature, and desired viscosity at the application temperature.

In an embodiment of the invention, the first polymer, the second polymer, the tackifier, and the plasticizer are present in amounts effective to provide a pressure sensitive adhesive composition that achieves a peel performance of at least about 0.5 N/cm, preferably at least about 1.0 N/cm, more preferably at least about 1.9 N/cm, and most preferably at least about 3.9 N/cm.

In one embodiment, the composition of the present invention is characterized in that it comprises:
- from about 20 to about 74 wt.% of the first polymer and the second polymer, preferably between about 25 to about 60 wt.%, more preferably from about 30 to about 45 wt.%;
- from about 25 to 75 wt.% of the tackifier, preferably from about 30 to about 70 wt.%, more preferably from about 40 to 60 wt.% of the total composition; and
- from about 1 to about 50 wt.% of the plasticizer, preferably from about 5 to about 30 wt.%, more preferably from about 7.5 wt.% to about 20 wt.%;
based on the total weight of the composition.

The amounts of the constituents stated herein are based on the total weight of the adhesive composition. The composition could be made up solely of (i.e., consist essentially of or consist of) the four primary constituents listed above. Alternatively, the adhesive composition may include one or more additional, optional constituents.

One such optional constituent is an antioxidant. An antioxidant, if present, may be included in an amount of from about 0.1 wt.% to about 3 wt.%, preferably of from about 0.2 wt.% to about 1 wt.%, based on the total weight of the composition. Antioxidants may be used to protect the polymers used herein, and thereby the total adhesive system, from the effects of thermal and oxidative degradation which normally occurs during the manufacture and application of the adhesive as well as in the ordinary exposure of the final product to the ambient environment. Among the applicable antioxidants are high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties.

Other optional additives may be incorporated into the adhesive composition of the present invention to modify particular physical properties.

These may include, for example, inert colorants e.g. titanium dioxide, fillers, fluorescent agents, UV absorbers, surfactants, other types of polymers, etc. Typical fillers include talc, calcium carbonate, clay silica, mica, wollastonite, feldspar, aluminum silicate, alumina, hydrated alumina, glass microspheres, ceramic microspheres, thermoplastic microspheres, baryte and wood flour.

In an embodiment of the invention, the adhesive composition has two glass transition temperatures. Preferably, the adhesive composition has:
- a first glass transition temperature of between about -65°C and about 35°C, preferably between about -45°C and about 15°C, and more preferably between about -25°C and about -5°C,
- a second glass transition temperature of between about -15°C and about 90°C, preferably between about 5°C and about 70°C, and more preferably between about 25°C and about 50°C,
wherein the second glass transition temperature is at least about 10°C, preferably at least about 15°C, and more preferably at least about 25°C higher than the first glass transition temperature, with all glass transition temperatures measured according to ASTM D3417 except that a ramp rate of 20°C per minute is used.

### Method for preparing the adhesive composition

The adhesive composition of the present invention may be formulated by using any of the mixing techniques known in the art. A representative example of the prior art mixing procedure involves placing all the components, except the first and second polymers used in the present invention, in a jacketed mixing kettle equipped with a rotor, and thereafter raising the temperature of the mixture to a range from 150°C to 200°C to melt the contents. It should be understood that the precise temperature to be used in this step would depend on the melting points of the particular constituents of the composition. Then the first and second polymers may be subsequently introduced to the kettle under agitation and the mixing is allowed to continue until a consistent and uniform mixture is formed. The content of the kettle is protected with inert gas such as carbon dioxide or nitrogen during the entire mixing process. Various additions and variation can be made to this procedure to produce the hot melt composition, such as, for example, applying vacuum to facilitate the removal of entrapped air. Other equipment useful for formulating the composition of the present invention includes, but is not limited to, single or twin screw extruders or other variations of extrusion machinery, kneaders, intensive mixers, Ross^{™} mixers, and the like.

### End-use applications

The adhesive composition of the present invention may be used as a pressure sensitive adhesive (PSA) or a hot melt adhesive (HMPSA) in a number of applications such as, for example, as the adhesive for a tape or a label, which may be used for packaging including food packaging. In an embodiment, the substrates or films used to form the tape and label are environmentally friendly. An embodiment of the invention includes a tape or label comprising a film and a hot melt adhesive composition described herein coated on a surface of the film.

In a further embodiment of the invention, a method of adhering the tape or label described herein to a substrate or article (such as a cardboard box or a beverage container) comprises applying the tape or label to the substrate or article at room temperature.

The resulting adhesives (e.g, PSA and HMPSA) may be applied to substrates using a variety of application techniques. Examples include using a lipped die or a curtain-coating type dye or a roll coater.

In an embodiment of the invention, a method of making a tape or label comprises the steps of: (1) heating a composition as described herein to provide a molten form; and (2) applying the molten form to a film.

### ASPECTS OF THE INVENTION

Aspect 1. A composition comprising:
- a first polymer selected from the group consisting of at least one of polylactic acid and a polylactic acid-based copolymer comprising residues of: (a) lactic acid in an amount of at least 70 mol.%, preferably at least 80 mol.%, more preferably at least 90 mol.%, and most preferably at least 95 mol.% and (b) a first comonomer;
- a second polymer selected from the group consisting of at least one of polycaprolactone and a polycaprolactone-based copolymer comprising residues of: (a) ε-caprolactone in an amount of at least 70mol.%, preferably at least 80 mol.%, more preferably at least 90 mol.%, and most preferably at least 95 mol.% and a second comonomer;
- a tackifier; and
- a plasticizer;
wherein the weight ratio of the second polymer to the sum of the first polymer and the second polymer is between about 0.3:1 and about 0.99:1, preferably between about 0.4:1 and about 0.95:1, more preferably between about 0.45:1 and about 0.9:1, and most preferably between about 0.5:1 to about 0.8:1.

Aspect 2. The composition of aspect 1, wherein the first polymer and the second polymer are not crosslinked.

Aspect 3. The composition of aspect 1, wherein the first polymer and the second polymer are crosslinked.

Aspect 4. The composition of any of aspects 1-3, wherein the first polymer, the second polymer, the tackifier, and the plasticizer are present in amounts effective to achieve a peel performance of at least about 0.5 N/cm, preferably at least about 1.0 N/cm, more preferably at least about 1.9 N/cm, and most preferably at least about 3.9 N/cm.

Aspect 5. The composition of any of aspects 1-4, wherein the composition has a viscosity of between about 250 to about 500,000 mPa.s at 150°C, preferably between about 500 to about 300,000 mPa.s at 150°C, and more preferably between about 1,000 to about 250,000 mPa.s at150°C.

Aspect 6. The composition of any of aspects 1-5, wherein the first polymer has a number average molecular weight (Mₙ) of between about 10 kDa and about 400 kDa, preferably between about 25 kDa and about 250 kDa, and more preferably between about 40 kDa and about 150 kDa.

Aspect 7. The composition of any of aspects 1-6, wherein the second polymer has number average molecular weight (Mₙ) of between about 1 kDa and about 400 kDa, preferably between about 25 kDa and about 300 kDa, and more preferably between about 50 kDa and about 200 kDa.

Aspect 8. The composition of any of aspects 1-7, wherein the first polymer is amorphous or essentially amorphous
Aspect 9. The composition of any of aspects 1-8, wherein the second polymer is semicrystalline.

Aspect 10. The composition of any of aspects 1-9, wherein:
(a) the sum of the contents of the first polymer and the second polymer is between about 20 and about 74 wt.% of the total composition, preferably between about 25 and about 60 wt.% of the total composition, more preferably between about 30 and about 45 wt.% of the total composition;
(b) the tackifier is present in an amount of between about 25 to about 75 wt.% of the total composition, preferably between about 30 and about 70 wt.% of the total composition, more preferably between about 40 to about 60 wt.% of the total composition; and
(c) the plasticizer is present in an amount of between about 1 and about 50 wt.% of the total composition, preferably between about 5 and about 30 wt.% of the total composition, more preferably 7.5 wt.% and about 20 wt.% of the total composition.

Aspect 11. The composition of any of aspects 1-10 further comprising an antioxidant.

Aspect 12. The composition of any of aspects 1-11, wherein:
the first polymer has a glass transition temperature of between about -120°C and about 0°C, preferably between about -100°C and about -20°C, and most preferably between about -80°C and about -40°C;
the second polymer has a glass transition temperature of between about 0°C and about 120°C, preferably between about 20°C and about 100°C, and most preferably between about 30°C and about 80°C; and
the tackifier has a glass transition temperature of between about 10°C and about 130°C, preferably between about 30°C and about 110°C, and more preferably between about 50°C and about 90°C.

Aspect 13. The composition of any of aspects 1-12, wherein the composition has:
a first glass transition temperature of between about -65°C and about 35°C, preferably between about -45°C and about 15°C, and more preferably between about -25°C and about -5°C; and
a second glass transition temperature of between about -15°C and about 90°C, preferably between about 5°C and about 70°C, and more preferably between about 25°C and about 50°C, wherein the second glass transition temperature is at least about 10°C, preferably at least about 15°C, and more preferably at least about 25°C higher than the first glass transition temperature.

Aspect 14. The composition of any of aspects 1-13, wherein the tackifier has a softening point of about 40°C and about 180°C, preferably between about 80°C and about 160°C, and more preferably between about 100°C and about 140°C.

Aspect 15. The composition of any of aspects 1-14, wherein the tackifier comprises a terpene phenolic resin.

Aspect 16. The composition of any of aspects 1-15, wherein the plasticizer comprises a mineral oil, a castor oil, soybean oil, a polyester, a citric acid derivative (preferably acetyl tributyl citrate), or a polyethylene glycol, or derivatives thereof.

Aspect 17. The composition of any of aspects 1-16, wherein the first polymer consists of polylactic acid.

Aspect 18. The composition of any of aspects 1-17, wherein the wherein the second polymer consists of polycaprolactone.

Aspect 19. The composition of any of aspects 1-16 or 18, wherein the first polymer consists of the polylactic acid-based copolymer and the first comonomer is selected from the group consisting of ε-caprolactone, α-caprolactone, β-caprolactone, γ-caprolactone, δ-caprolactone, glycolide, glycolic acid, and caprolactam.

Aspect 20. The composition of any of aspects 1-17 or 19, wherein the second polymer consists of the polycaprolactone-based copolymer and the second comonomer is selected from the group consisting of at least one of lactic acid, α-caprolactone, β-caprolactone, γ-caprolactone, δ-caprolactone, glycolide, glycolic acid, and caprolactam.

Aspect 21. A tape or label comprising:
- a film; and
- the composition of any of aspects 1-20 coated on a surface of the film.

Aspect 22. A method of making a tape or label comprising the steps of:
- heating the composition of any of aspects 1-20 to provide a molten form; and
- applying the molten form to a film.

Aspect 23. A method of adhering the tape or label of aspect 21 to a substrate or article comprising applying the tape or label to the substrate or article at room temperature.

Aspect 24. Use of the composition of any one of aspects 1-20, as a pressure sensitive adhesive (PSA), in particular a hot melt pressure sensitive adhesive (HMPSA).

### EXAMPLES

The following raw materials were used to prepare the adhesive compositions of the invention:

**Table 1.**

| **Raw materials** | **Supplier** |
|---|---|
| Plasticizer | Oleris^{®} Esterol A, a castor oil derivative, commercially available from Arkema |
| Tackifier | Sylvares^{™} TP2040, a terpene phenolic tackifier having a ring and ball softening point of about 119°C, commercially available from Kraton |
| PCL | Polycaprolactone (80 kDa Mn), commercially available from Sigma Aldrich |
| PLA | Ingeo 10250D, polylactic acid commercially available from NatureWorks; the polymer is amorphous, has a glass transition temperature of about 58°C, and has an Mn of about 80 kDa |
| Antioxidant | Evernox^{®} 10, a sterically hindered phenolic antioxidant commercially available from Everspring Chemical Co. |

Examples 1-11 were prepared by mixing the components listed in Table 2 in a hot melt mantle. The plasticizer, tackifier, and antioxidant were first added to a metal can and heated to about 148°C. The components were mixed with an impeller at about 150 rpm. Upon reaching the target temperature, PCL and PLA were gradually added. After one hour, the mixing was stopped and the adhesive composition was removed.

**Table 2.**

| **Example** | **1c** | **2i** | **3i** | **4i** | **5i** | **6i** | **7i** | **8i** | **9c** | **10c** | **11c** |
|---|---|---|---|---|---|---|---|---|---|---|---|
| Plasticizer | 12.5 | 12.5 | 12.5 | 12.5 | 12.5 | 12.5 | 12.5 | 12.5 | 12.5 | 12.5 | 12.5 |
| Tackifier | 49.5 | 49.5 | 49.5 | 49.5 | 49.5 | 49.5 | 49.5 | 49.5 | 49.5 | 49.5 | 49.5 |
| PCL | 37.5 | 35.63 | 33.75 | 30 | 22.50 | 18.75 | 16.88 | 15 | 11.25 | 7.5 | 0 |
| PLA | 0 | 1.88 | 3.75 | 7.5 | 15 | 18.75 | 20.63 | 22.5 | 26.25 | 30 | 37.5 |
| Antiox. | 0.5 | 0.5 | 0.5 | 0.5 | 0.5 | 0.5 | 0.5 | 0.5 | 0.5 | 0.5 | 0.5 |
| Total (wt.%) | 100 | 100 | 100 | 100 | 100 | 100 | 100 | 100 | 100 | 100 | 100 |
| Wt. ratio PCL | 1 | 0.95 | 0.9 | 0.8 | 0.6 | 0.5 | 0.45 | 0.4 | 0.3 | 0.2 | 0 |
| PSA Av. Peel (N/cm) | 0.95 | 2.43 | 2.14 | 3.58 | 4.79 | 4.49 | 1.09 | 0.58 | 0.06 | 0.04 | 0 |
| PSA thickness | 1 | 1 | 1 | 1 | 1 | 1 | 1 | 1 | 1 | 1 | 1 |
| PSA failure type | Adh | Adh | Adh | Adh | Adh | Adh | Adh | Adh | Adh | Adh | Adh |

Adhesive formulations were coated to Mylar at a thickness of about 25.4 microns (i.e., 1 mil). An application temperature of 148°C was used for the coatings. The Mylar coated samples rested overnight and were then applied to stainless steel panels. The samples attached to steel panels rested overnight. The laminates obtained were tested using an Instron tensile testing machine. A 90° peel test was performed at a rate of about 30.5 cm (i.e., 12 inches) per minute. Ambient temperature was controlled to 23.3 ± 1.1 °C and 50 ± 2 % relative humidity.

Example 1c (comparative) shows an adhesive with a polymer weight portion of 100% polycaprolactone. This adhesive exhibited a relatively low pressure sensitive adhesive peel performance.

Example 11c (comparative) shows an adhesive with a polymer weight portion of 100% polylactic acid. This adhesive manifested a complete absence of pressure sensitive adhesive peel efficacy.

Example 5 has a polymer portion weight portion of 60% polycaprolactone and 40% polylactic acid. This adhesive exhibited excellent peel performance. Although Example 5 demonstrated the best peel performance, other examples demonstrated reasonable peel performance and would be appropriate for many applications. Examples 7 and 8 had peel performance values of 1.09 N/cm (i.e., 281 g-f/in) and 0.58 N/cm (i.e., 149 g-f/in), respectively. Examples 2 and 3 showed a noticeable increase in peel performance, having values of 2.43 N/cm (i.e., 629 g-f/in) and 2.14 N/cm (i.e., 554 g-f/in), respectively. Finally, Examples 4-6 showed a further, noticeable increase in peel performance, having values ranging from 3.58 N/cm to 4.79 N/cm (i.e., 927 g-f/in to 1,241 g-f/in). The mode of failure of the Examples of the present invention was adhesive.

Unless defined otherwise, all technical and scientific terms used herein have the same meanings as commonly understood by one of ordinary skill in the art. All publications and patents specifically mentioned herein are incorporated by reference in their entirety for all purposes including describing and disclosing the chemicals, instruments, statistical analyses and methodologies which are reported in the publications which might be used in connection with the invention. All references cited in this specification are to be taken as indicative of the level of skill in the art. Nothing herein is to be construed as an admission that the invention is not entitled to antedate such disclosure by virtue or prior invention.

Although illustrated and described herein with reference to certain specific embodiments, the present invention is nevertheless not intended to be limited to the details shown. Rather, various modifications may be made in the details within the scope and range of equivalents of the claims and without departing from the spirit of the invention.

## Claims

1. An adhesive composition comprising:
- a first polymer selected from the group consisting of at least one of polylactic acid and a polylactic acid-based copolymer comprising residues of: (a) lactic acid in an amount of at least 70 mol%, preferably at least 80 mol.%, more preferably at least 90 mol.%, and most preferably at least 95 mol.% and (b) a first comonomer;
- a second polymer selected from the group consisting of at least one of polycaprolactone and a polycaprolactone-based copolymer comprising residues of: (a) ε-caprolactone in an amount of at least 70 mol.%, preferably at least 80 mol.%, more preferably at least 90 mol.%, and most preferably at least 95 mol.% and (b) a second comonomer;
- a tackifier; and
- a plasticizer;
wherein the weight ratio of the second polymer to the sum of the first polymer and the second polymer is between about 0.3:1 and about 0.99:1, preferably between about 0.4:1 and about 0.95:1, more preferably between about 0.45:1 and about 0.9:1, and most preferably between about 0.5:1 to about 0.8:1.

2. The composition of claim 1, wherein the composition has a viscosity of between about 250 to about 500,000 mPa.s at 150°C, preferably between about 500 to about 300,000 mPa.s at 150°C, and more preferably between about 1,000 to about 250,000 mPa.s at 150°C.

3. The composition of any one of claims 1-2, wherein the first polymer has a number average molecular weight (Mₙ) of between about 10 kDa and about 400 kDa, preferably between about 25 kDa and about 250 kDa, and more preferably between about 40 kDa and about 150 kDa.

4. The composition of any one of claims 1-3, wherein the second polymer has number average molecular weight (Mₙ) of between about 1 kDa and about 400 kDa, preferably between about 25 kDa and about 300 kDa, and more preferably between about 50 kDa and about 200 kDa.

5. The composition of any one of claims 1-4, wherein the first polymer is amorphous or essentially amorphous.

6. The composition of any one of claims 1-5, wherein the second polymer is semicrystalline.

7. The composition of any one of claims 1-6, comprising:
- from about 20 to about 74 wt.% of the first polymer and the second polymer, preferably between about 25 to about 60 wt.%, more preferably from about 30 to about 45 wt.%;
- from about 25 to 75 wt.% of the tackifier, preferably from about 30 to about 70 wt.%, more preferably from about 40 to 60 wt.% of the total composition; and
- from about 1 to about 50 wt.% of the plasticizer, preferably from about 5 to about 30 wt.%, more preferably from about 7.5 wt.% to about 20 wt.%;
based on the total weight of the composition.

8. The composition of any one of claims 1-7, wherein:
the first polymer has a glass transition temperature of between about -120°C and 0°C, preferably between about -100°C and -20°C, and more preferably between about -80°C and -40°C;
the second polymer has a glass transition temperature of between about 0°C and 120°C, preferably between about 20°C and 100°C, and more preferably between about 30°C and 80°C; and
the tackifier has a glass transition temperature of between about 10°C and 130°C, preferably between about 30°C and 110°C, and more preferably between about 50°C and 90°C.

9. The composition of any one of claims 1-8, wherein the composition has:
a first glass transition temperature of between about -65°C and 35°C, preferably between about -45°C and 15°C, and more preferably between about -25°C and -5°C; and
a second glass transition temperature of between about -15°C and 90°C, preferably between about 5°C and 70°C, and more preferably between about 25°C and 50°C;
wherein the second glass transition temperature is at least 10°C, preferably at least 15°C, and more preferably at least 25°C higher than the first glass transition temperature.

10. The composition of any one of claims 1-9, wherein the tackifier comprises a terpene phenolic resin.

11. The composition of any one of claims 1-10, wherein the plasticizer comprises at least one of a mineral oil, a castor oil, soybean oil, a polyester, a citric acid derivative (preferably acetyl tributyl citrate), or a polyethylene glycol, or derivatives thereof.

12. The composition of any one of claims 1-11, wherein the first polymer consists of polylactic acid.

13. The composition of any one of claims 1-12, wherein the second polymer consists of polycaprolactone.

14. A tape or label comprising:
a film; and
the adhesive composition of any one of claims 1-13 coated on a surface of the film.

15. Use of the composition of any one of claims 1-13, as a pressure sensitive adhesive (PSA), in particular a hot melt pressure sensitive adhesive (HMPSA).
